Europäisches Patentamt

European Patent Office

Office européen des brevets

(19)

(11) **EP 1 043 603 A1**

(12) **EUROPÄISCHE PATENTANMELDUNG**

(43) Veröffentlichungstag:
    **11.10.2000 Patentblatt 2000/41**

(51) Int Cl.7: **G01S 17/10**

(21) Anmeldenummer: **99106840.4**

(22) Anmeldetag: **06.04.1999**

(84) Benannte Vertragsstaaten:
    **AT BE CH CY DE DK ES FI FR GB GR IE IT LI LU MC NL PT SE**
    Benannte Erstreckungsstaaten:
    **AL LT LV MK RO SI**

(71) Anmelder: **Leica Geosystems AG**
    **9435 Heerbrugg (CH)**

(72) Erfinder:
- **Aebischer, Beat**
  **9435 Heerbrugg (CH)**
- **Betschon, Christian**
  **9410 Heiden (CH)**
- **Gächter, Bernhard**
  **9436 Balgach (CH)**
- **Orawez, Georg**
  **9444 Diepoldsau (CH)**
- **Ramseier, Ernst**
  **9443 Widnau (CH)**
- **Rutishauser, Ester**
  **9427 Wolfhalden (CH)**

(74) Vertreter: **Kaminski, Susanne, Dr.**
    **Letzanaweg 25**
    **9495 Triesen (LI)**

(54) **Verfahren zur Messung der Entfernung mindestens eines Ziels**

(57)     Zur Messung der Entfernung von Zielen werden eine Schwelle ($\varepsilon$) überschreitende lokale Maxima einer Korrelationsfunktion (f) ermittelt, deren Stützwerte sich aus Skalarprodukten eines von Reflexionen eines optischen Impulses an den Zielen erzeugten Empfangssignals (e) mit einer Reihe von Vergleichsfunktionen, zeitlich verschobenen Exemplaren einer Referenzfunktion (r), ergeben und die Laufzeiten der Reflexionen aus den zeitlichen Verschiebungen der entsprechenden Vergleichsfunktionen abgeleitet. Durch Interpolation bezüglich der zeitlichen Verschiebungen oder Optimierung derselben, z. B. indem sie so eingestellt werden, dass der Orthogonalabstand des Empfangssignals (e) von dem Vektorraum, der von den entsprechenden Vergleichsfunktionen aufgespannt wird, minimal wird, können die Laufzeiten noch genauer bestimmt werden.

Fig. 2

**Beschreibung**

**Technisches Gebiet**

Die Erfindung betrifft ein Verfahren zur Messung der Entfernung mindestens eines Ziels gemäss dem Oberbegriff des Anspruchs 1. Derartige Verfahren werden vor allem in Entfernungsmessgeräten eingesetzt, wie sie etwa bei Bau- und Grundstücksvermessungen Verwendung finden.

**Stand der Technik**

Aus der DE-A-41 33 196 ist ein gattungsgemässes Verfahren bekannt, bei welchem ein Eingangssignal aus Signalen zusammengesetzt wird, welche auf mehrere von einem Ziel, dessen Entfernung bestimmt werden soll, reflektierte optische Impulse zurückgehen, die zur Verbesserung der zeitlichen Auflösung jeweils mit unterschiedlichen internen Verzögerungen ausgesandt wurden. Aus dem Zeitpunkt, an welchem das besagte Eingangssignal sein Maximum erreicht, wird dann die Laufzeit abgeleitet und daraus die Entfernung berechnet.

Dieses Verfahren hat den Nachteil, dass die Bestimmung der Entfernung letztlich auf einem einzelnen Messwert oder allenfalls einer geringen Anzahl von Messwerten beruht. Wenn, wie nicht auszuschliessen, diese einzelnen oder wenigen Messwerte durch Rauschen verfälscht sind, so kann das Resultat ebenfalls mit einem grossen Fehler behaftet sein.

Zwar ist es aus der DE-A-36 20 226 bekannt, das Rauschen des Eingangssignals durch wiederholte Aussendung des Impulses und Addition der gleichen Laufzeiten entsprechenden Abtastwerte des empfangenen Signals zu vermindern, doch erfordert dies, insbesondere wenn ausserdem eine hohe Auflösung erzielt werden soll, eine hohe Zahl von Impulsen und damit längere Messzeiten.

**Darstellung der Erfindung**

Der Erfindung liegt die Aufgabe zu Grunde, ein gattungsgemässes Verfahren anzugeben, bei welchem das Verhältnis zwischen der erzielbaren Genauigkeit und dem erforderlichen Aufwand, insbesondere der Zahl der erforderlichen Impulse und damit der erforderlichen Messzeit, verbessert ist, insbesondere bereits mit einer geringen Anzahl von Impulsen oder sogar schon einem einzigen Impuls eine hohe Genauigkeit der Entfernungsmessung erzielt wird. Diese Aufgabe wird durch die Merkmale im Kennzeichen des Anspruchs 1 gelöst.

Durch die Erfindung wird ein Verfahren angegeben, bei welchem die gesamte Form des Eingangssignals für die Bestimmung der Laufzeit benützt wird. Dadurch ist die Abhängigkeit des Resultats von allfällig durch Rauschen verfälschten Einzelabtastungen stark vermindert. Schon aus der Auswertung des aus einem einzigen optischen Impuls resultierenden Eingangssignals lässt sich die Entfernung mit grosser Genauigkeit und geringer Messunsicherheit bestimmen. Ausserdem ist es mit dem erfindungsgemässen Verfahren ohne weiteres möglich, mehrere Ziele mit einer einzigen Messung zu erfassen und zu unterscheiden. Dies ist vor allem bei grossen Messdistanzen von Bedeutung, wo wegen der Strahlaufweitung eine Konzentration desselben auf ein einziges Ziel nicht mehr gegeben sein muss.

**Kurze Beschreibung der Zeichnungen**

Im folgenden wird die Erfindung anhand von Figuren, welche lediglich ein Ausführungsbeispiel darstellen, näher erläutert. Es zeigen

Fig. 1        ein Blockschaltbild einer zur Ausführung des erfindungsgemässen Verfahrens geeigneten Vorrichtung,

Fig. 2        untereinander angeordnet ein Empfangssignal, eine Referenzfunktion und eine von Skalarprodukten zwischen dem Empfangssignal und durch zeitliche Verschiebungen der Referenzfunktion hergestellten Vergleichsfunktionen gebildete Korrelationsfunktion, jeweils als Funktion der Zeit,

Fig. 3a        schematisch einen Aufbau zur Ermittlung der Referenzfunktion gemäss einer ersten Methode und

Fig. 3b        schematisch einen Aufbau zur Ermittlung der Referenzfunktion gemäss einer zweiten Methode.

**Wege zur Ausführung der Erfindung**

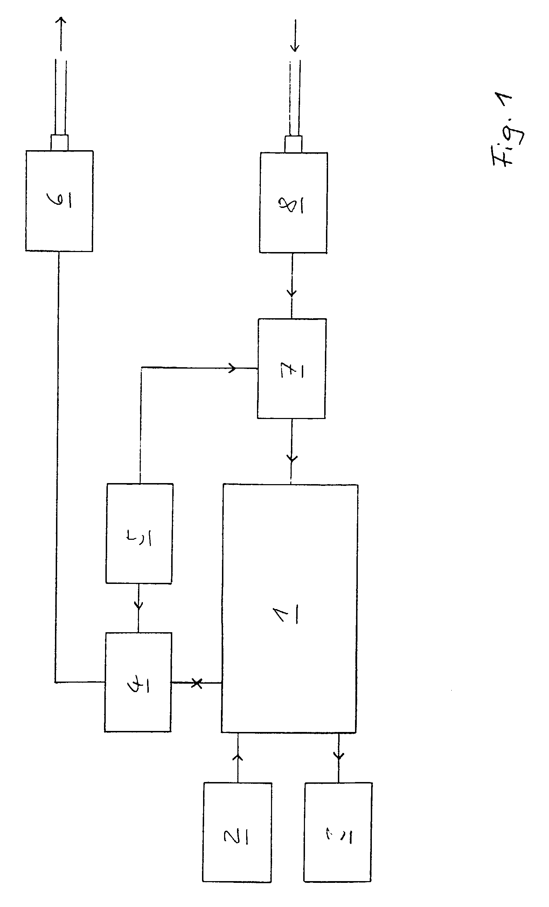

Die Vorrichtung nach Fig. 1 umfasst eine Recheneinheit 1, welche sowohl der Steuerung der Vorrichtung als auch der Auswertung der Messwerte dient. An sie sind eine Eingabeeinheit 2 zur Eingabe von Befehlen, z. B. eine Tastatur und eine Ausgabeeinheit 3 zur Ausgabe von Resultaten etc., z. B. eine Flüssigkristallanzeige, angeschlossen. Ein Zähler 4, der die Zyklen des Ausgangssignals eines Oszillators 5 zählt, steht mit der Recheneinheit 1 in Verbindung und gibt auch Signale an einen Sender 6 ab. Der Oszillator 5 steuert auch einen Analog-Digital-Wandler 7, der einem Empfänger 8 nachgeschaltet und ausserdem mit einem Eingang der Recheneinheit 1 verbunden ist.

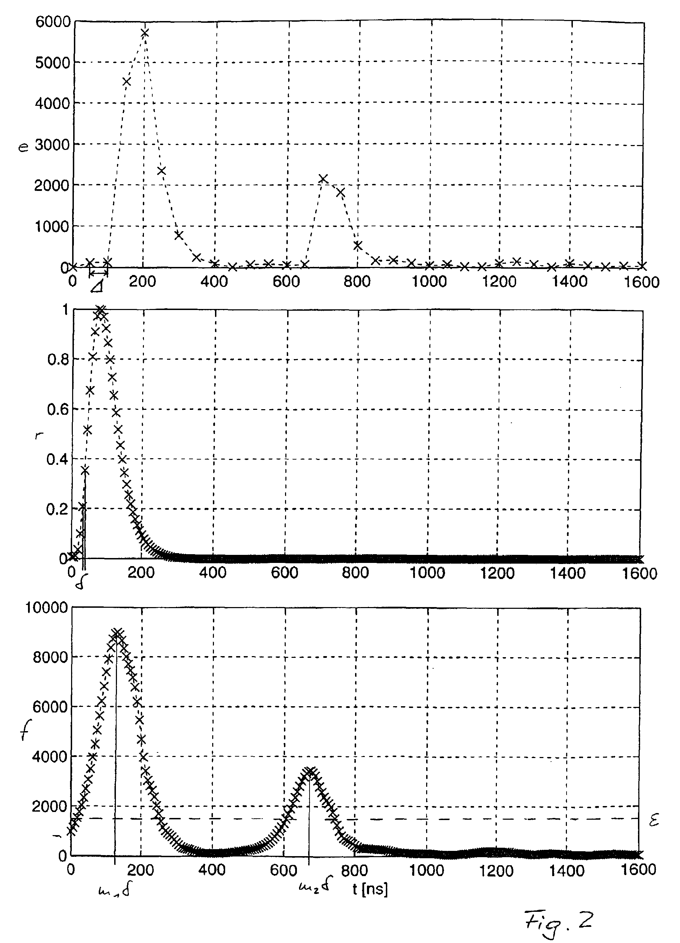

Der Oszillator 5 erzeugt ein elektrisches Signal mit einer Frequenz von im Beispiel 20 MHz, also einer Periode von 50 ns. Nach jeweils z. B. 2000 Zyklen gibt der Zähler 4 ein Signal an den Sender 6 ab, das die Aussendung eines kurzen optischen Impulses durch denselben verursacht. Der Impuls wird von einem Ziel oder auch von mehreren Zielen, die jeweils einen Teil des Lichtkegels schneiden, reflektiert und die Reflexionen vom Empfänger 8 aufgefangen und in ein elektrisches Empfangssignal e (Fig. 2 oben) umgewandelt. Das Empfangssignal e kann wegen des begrenzten Frequenzgangs des Empfängers und der an denselben anschliessenden Elektronik zeitlich verhältnismässig stark gedehnt sein. Es wird vom A/D-Wandler 7, der wie erwähnt vom Oszillator 5 gesteuert wird, in Abständen eines Abtastinkrements $\Delta$=50 ns abgetastet. Die entsprechenden Werte $e(n\Delta)$, n=0,...,N, wobei im dargestellten Beispiel N=32 ist, werden von der Recheneinheit 1 gespeichert. Die Speicheradresse wird dabei jeweils aus der vom Zähler 4 gelieferten Zahl n abgeleitet, die ein Mass des Abtastzeitpunkts, bezogen auf das Signal, das die Aussendung des optischen Impulses durch den Sender 6 ausgelöst hat, darstellt.

Zur Auswertung in der Recheneinheit 1 wird eine Referenzfunktion r (Fig. 2 Mitte) herangezogen, die in weiter unten genauer ausgeführter Weise ermittelt wurde. Es werden Werte der Referenzfunktion r an Stellen benützt, die im Abstand bestimmter Referenzinkremente aufeinanderfolgen. Die Referenzinkremente entsprechen vorzugsweise jeweils einer festen Zeitdifferenz $\delta$, z. B. einem Bruchteil $\delta=\Delta/M$ des Abtastinkrements $\Delta$, wobei M eine ganze Zahl >1 ist; im konkret dargestellten Fall ist M=8. Die Werte $r(i\delta)$, i=0,...,MN sind in der Recheneinheit 1 fest gespeichert. Unterhalb eines verhältnismässig kleinen Trägerbereichs sind die Werte gleich Null, oberhalb desselben sind sie ebenfalls gleich Null oder fallen exponentiell ab, so dass die Referenzfunktion r über das Intervall $[0, N\Delta]$ hinaus fortgesetzt werden kann, im einfachsten Fall indem ausserhalb desselben $r(i\delta)=0$ gesetzt wird. Aus der Referenzfunktion r werden nun nacheinander Vergleichsfunktionen $v_m$, m=0,...,MN erzeugt, indem jeweils ein um ein festes Zeitintervall verschobenes Exemplar der Referenzfunktion r hergestellt wird. Das Zeitintervall ist jeweils ein Vielfaches $m\delta$ eines hier dem Referenzinkrement $\delta$ entsprechenden Grundintervalls. Die Vergleichsfunktionen $v_m$ können, falls erforderlich, auch noch anderweitig modifiziert, z. B. zur Kompensation der Strahlaufweitung mit einem geeigneten Faktor multipliziert sein. Von allfälligen Modifikationen dieser Art abgesehen gilt

$$(1) \qquad v_m(i\delta) = r((i-m)\delta).$$

Mit jeder Vergleichsfunktion $v_m$ wird unmittelbar als Mass der Aehnlichkeit zwischen derselben und dem Empfangssignal e eine Aehnlichkeitsfunktion berechnet. Dabei handelt es sich um eine Korrelationsfunktion f, die einem Skalarprodukt zwischen den beiden Funktionen entspricht. Für diejenigen Zeitpunkte, wo kein Abtastwert von e existiert, sondern nur einer für $v_m$, also wo i mod M≠0 ist, wird der Wert $e(i\delta)=0$ gesetzt. Es ergibt sich folglich für die Korrelationsfunktion

$$(2) \quad f(m\delta) = \sum_{i=0}^{N} e(iM\delta)v_m(iM\delta) = \sum_{i=0}^{N} e(i\Delta)r(i\Delta-m\delta),$$

für m=0,...,MN, eine Funktion, die in Fig. 2 unten dargestellt ist.

Nun werden jene Vergleichsfunktionen bestimmt, die dem Empfangssignal e besonders ähnlich sind und einen grösseren Beitrag zu demselben liefern, indem jene lokalen Maxima der Funktion f festgestellt werden, bei denen der Wert der besagten Funktion eine bestimmte Schwelle $\varepsilon$, die auf die Umstände der Messungen, insbesondere das Ausmass zu erwartender Störungen eingestellt werden kann, überschreiten. Die entsprechenden Zeiten $m_k\delta$, k=1,..., K stellen approximative Empfangszeitpunkte von Reflexionen des optischen Impulses an Zielen 1,...,K dar. Im in Fig. 2 dargestellten Beispiel ist K=2, doch sind auch höhere Zahlen möglich.

Durch Interpolation bezüglich der Zeitpunkte der Maxima kann der Empfangszeitpunkt zur Erzielung einer höheren zeitlichen Auflösung noch genauer bestimmt werden. Bei der einfachsten Vorgehensweise, die sich vor allem dann eignet, wenn die Maxima verhältnismässig weit auseinanderliegen und die Vergleichsfunktionen nicht oder nur wenig überlappen - also die Reflexionen an den verschiedenen Zielen sich nicht oder kaum überlagern -, werden die einzelnen Maxima für sich behandelt und die Korrelationsfunktion f jeweils durch eine Interpolationsfunktion interpoliert und dann die Zeit $T_k$, zu welcher dieselbe ihr Maximum erreicht, als exakter Empfangszeitpunkt bestimmt. Handelt es sich beispielsweise um eine quadratische Funktion, die durch die Punkte $((m_k-1)\delta, f((m_k-1)\delta))$, $(m_k\delta, f(m_k\delta))$ und $((m_k+1)\delta, f((m_k+1)\delta))$ gelegt wird, so führt dies auf

$$(3) \qquad T_k = m_k\delta + \frac{\delta}{2} \frac{f((m_k + 1)\delta) - f((m_k - 1)\delta)}{2f(m_k\delta) - f((m_k - 1)\delta) - f((m_k + 1)\delta)}$$

Gemäss einer anderen Vorgehensweise werden die Empfangszeitpunkte genauer bestimmt, indem die vorgängig bestimmten Vergleichsfunktionen $v_{m_k}$, k=1,...K durch kleine zeitliche Verschiebungen so angepasst werden, dass sie das Empfangssignal e optimal approximieren. Mit dem Ansatz

$$(4) \quad e(n\Delta) = \sum_{k=1}^{K} a_k v_{m_k}(n\Delta)$$

ergibt sich mit den Spaltenvektoren $\underline{e} = (e(n\Delta), n=0,...,N)$ und entsprechend $\underline{a} = (a_k, k=1,...,K)$ die lineare Gleichung

$$(5) \qquad \underline{e} = \underline{V}a,$$

wobei $V_k^n = v_{m_k}(n\Delta) = r(n\Delta - m_k\delta)$, n=0,..., N, k=1,...,K, d. h.

$$(6) \quad V = \begin{bmatrix} v_{m_1}(0) & \cdots & v_{m_K}(0) \\ M & & M \\ v_{m_1}(N\Delta) & \cdots & v_{m_K}(N\Delta) \end{bmatrix} = \begin{bmatrix} r(-m_1\delta) & \cdots & r(-m_K\delta) \\ M & & M \\ r(N\Delta - m_1\delta) & \cdots & r(N\Delta - m_K\delta) \end{bmatrix}$$

Der Ausdruck lässt sich verallgemeinern auf kontinuierliche Zeitvariable. Dazu wird die Referenzfunktion r ausgehend von Stützwerten zu einer kontinuierlichen, d. h. auf dem ganzen Intervall [0, N$\Delta$] definierten Funktion ergänzt, die möglichst stetig, vorzugsweise mindestens einmal stetig differenzierbar ist. Dies kann z. B. durch quadratische Spline-Funktionen geschehen. Die Referenzfunktion r kann über das angegebene Intervall hinaus ausgedehnt werden, indem sie dort gleich Null gesetzt wird. Alternativ kann auch ein exponentielles Ausklingen angenommen werden. Die Vergleichsfunktionen $v_m$ können dann auf dem angegebenen Intervall ebenfalls durch stetige Funktionen $\bar{V}_T$ ersetzt werden, so dass an die Stelle der diskreten Variablen m eine reelle Variable T tritt:

$$(7) \qquad \bar{v}_T(n\Delta) = r(n\Delta - T).$$

Damit ist auch V zu einer Funktion reeller Variabler ergänzt:

$$(8) \qquad V(\underline{T})_k^n = \bar{v}_{T_k}(n\Delta) = r(n\Delta - T_k), \text{ n=0,...,N, k=1,...,K,}$$

wobei $T_1,... T_K$ zu einem Vektor $\underline{T}$ zusammengefasst ist.
Ausgehend von den approximativen Anfangswerten $T_k = m_k\delta$ lassen sich nun exakte Empfangszeiten bestimmen, indem die Approximation von $\underline{e}$ durch Variation von $\underline{a}$ und $\underline{T}$ optimiert wird. Dazu wird die Minimalstelle des mittleren quadratischen Abstands zwischen $\underline{e}$ und $V(\underline{T})\underline{a}$,

$$(9) \qquad F(\underline{a},\underline{T}) = \|\underline{e} - V(\underline{T})\underline{a}\|$$

bestimmt. Zuerst wird die Optimierung nach $\underline{a}$ ausgeführt. $F(\underline{a},\underline{T})$ ist minimal für

$$(10) \qquad \underline{a} = V(\underline{T})^+ \underline{e},$$

wobei $V(\underline{T})^+$ die Pseudoinverse der Abbildung $V(\underline{T})$ ist. Diese Abbildung bildet Vektoren im Bildraum von $V(\underline{T})$ jeweils auf ihr eindeutig bestimmtes Urbild im Komplement des Kerns von $V(\underline{T})$ ab, während sie Vektoren im Komplement des Bildraums auf $\underline{0}$ abbildet. S. dazu J. Stör: Einführung in die numerische Mathematik I, Heidelberger TB 105, Springer-Verlag 1976, S. 184ff.

Für die konkrete Berechnung von $V(\underline{T})^+\underline{e}$ ist es jedoch nicht erforderlich, die Matrix $V(\underline{T})^+$ zu bestimmen. Sie kann auf effiziente Weise durch bekannte numerische Verfahren erfolgen wie die QR-Zerlegung mittels Housholder-Transformation (s. z. B. G. H. Golub, Ch. F. van Loan: Matrix Computations, North Oxford Academic, London 1986, Ch. 6.1, 6.2).

(9) lässt sich nun ausdrücken als

$$(11) \qquad F(\underline{T}) = \left\| \underline{e} - V(\underline{T})V(\underline{T})^+ \underline{e} \right\|.$$

$V(\underline{T})V(\underline{T})^+$ ist die Projektion $P(\underline{T})$ auf den von den Vergleichsfunktionen $\bar{v}_{T_k}$, k=1,...,K aufgespannten Vektorraum, so dass (9)

$$(12) \qquad F(\underline{T}) = \left\| \underline{e} - P(\underline{T})\underline{e} \right\| = \left\| (1 - P(\underline{T})\underline{e} \right\|,$$

entspricht, d. h. es wird die Minimalstelle des Abstandes zwischen $\underline{e}$ und seiner Projektion auf den von den $\bar{v}_{T_k}$, k=1,...K aufgespannten Vektorraum als Funktion von $\underline{T}=(T_1,...,T_K)$ gesucht.

Die Minimalstelle der nichtlinearen Funktion $F(\underline{T})$ kann mit bekannten numerischen Methoden ermittelt werden. Beispiele sind die Methode des steilsten Abstiegs oder die Bestimmung einer Nullstelle des Gradienten von F mittels einer Iteration von linearen Approximationen (Newton-Methode). S. dazu z. B. E. Stiefel: Einführung in die numerische Mathematik, Teubner Studienbücher Mathematik, B. G. Teubner 1976, S. 83f. Bevorzugt werden jedoch Methoden mit besserem Konvergenzverhalten, wie sie etwa den folgenden Artikeln zu entnehmen sind: D. W. Marquardt: An Algorithm for Least-Squares Estimation of Nonlinear Parameters, SIAM Journal on Applied Mathematics 11 (1963), 431-441 und K. Levenberg: A Method for the Solution of Certain Non-Linear Problems in Least Squares, Quarterly of Applied Mathematics 2 (1944), 164-168.

Aus dem Empfangszeitpunkt $T_k$ kann nun jeweils durch Addition eines von der Festlegung des Nullpunkts abhängigen festen Terms $T_0$ die Laufzeit $L_k=T_0+T_k$ des optischen Impulses und daraus die Entfernung $x_k$ des k-ten Ziels sehr einfach gemäss

$$(13) \qquad x_k = \frac{c}{2}L_k$$

bestimmt werden, wobei c die Lichtgeschwindigkeit bedeutet.

Mit $T_k$, k=1,...,K ist auch $V(\underline{T})$ bekannt, so dass mit (10) auch die Koeffizienten $a_k$, k=1,...K berechnet werden können, die die Ziele 1,...,K gewichten.

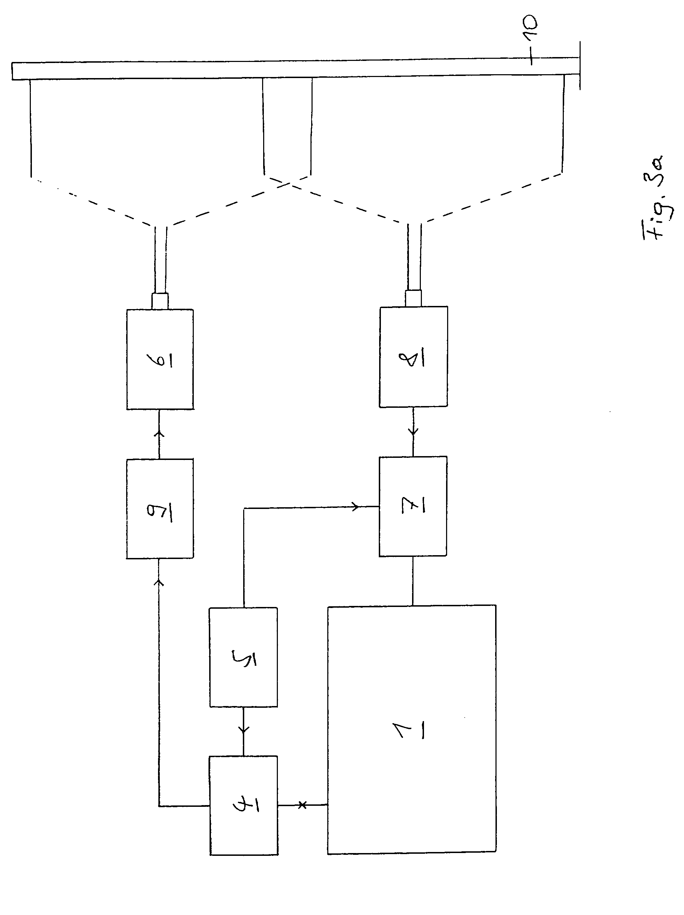

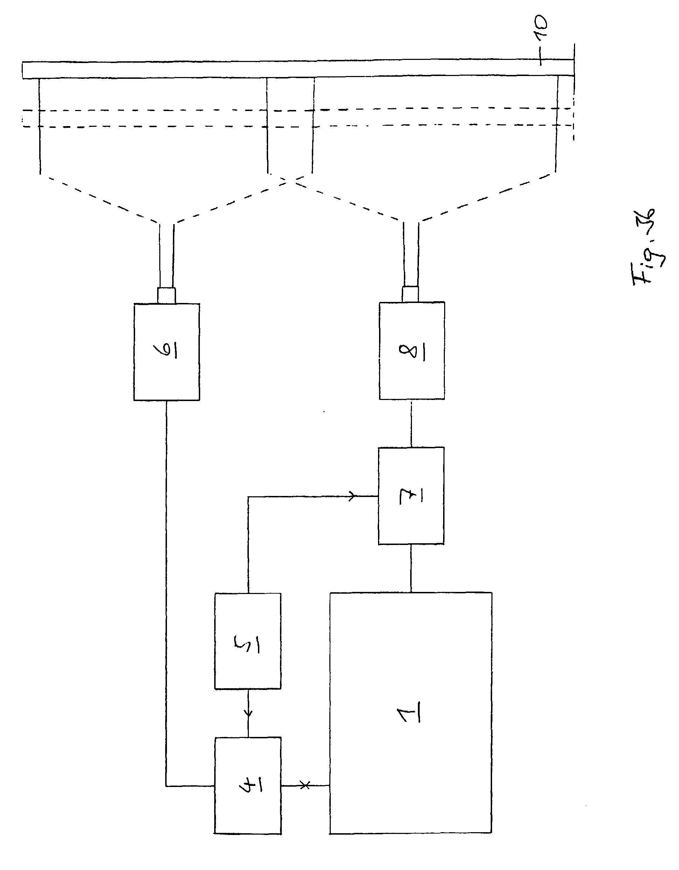

Die Ermittlung der Referenzfunktion kann auf verschiedene Weisen erfolgen. Gemäss Fig. 3a wird sie mittels eines wesentliche Teile der Vorrichtung gemäss Fig. 1 umfassenden Aufbaus vorgenommen. Er umfasst die Recheneinheit 1, den Zähler 4 und den Oszillator 5 sowie den Sender 6 und den Empfänger 8 mit dem nachgeschalteten A/D-Wandler 7. Zwischen dem Zähler 4 und dem Sender 6 ist ein Verzögerungsglied 9 eingeschoben. Ausserdem ist ein Referenzziel 10, z. B. eine Tafel vorgesehen, das in einer bestimmten Entfernung vom Sender 6 und Empfänger 8 aufgestellt ist.

Nach jeweils 2'000 Zyklen des Oszillators 5 gibt der Zähler 4 ein Signal an das Verzögerungsglied 9 ab, das es mit einer bestimmten Verzögerung an den Sender 6 weiterleitet und die Aussendung eines optischen Impulses durch denselben auslöst. Der am Referenzziel 10 reflektierte optische Impuls erzeugt am Ausgang des Empfängers 8 ein Referenzempfangssignal, das im A/D-Wandler 7 in Zeitabständen abgetastet wird, die dem Abtastinkrement $\Delta$ entsprechen. Die so ermittelten Stützwerte gelangen an die Recheneinheit 1 und werden dort jeweils, einem bestimmten Abtastzeitpunkt zugeordnet, gespeichert.

Mit jeder Auslösung des Senders 6 über das Verzögerungsglied 9 wird die Verzögerung des Signals auf den nächsten Verzögerungswert $\tau_i$, i=0,...,I-1, $\tau_0<...<\tau_{I-1}$ - Ausgangswert ist $\tau_0=0$ - umgestellt, was sich in entsprechenden zeitlichen Verschiebungen des Referenzempfangssignals niederschlägt. Da die vom Oszillator 5 gesteuerte Abtastung desselben unverzögert erfolgt, entspricht dies jeweils - bezogen auf den Anfangswert - einer Vorverlegung des Abtastzeitpunkts um den Verzögerungswert $\tau_i$. Nach der Abtastung und Speicherung von I Signalen wird die Referenzfunktion r zusammengesetzt, indem jeder Stützwert seinem Abtastzeitpunkt zugeordnet wird. Für die Verzögerungswerte kann $\tau_i = i\delta$, i=0,...,I-1 gewählt werden. Die Stützwerte folgen dann in festen Abständen aufeinander, die dem Referenzinkrement $\delta$ entsprechen. Falls dies nicht der Fall ist, müssen die Werte der Referenzfunktion r an den ganzzahligen Vielfachen des Referenzinkrements entsprechenden Stellen für die Verwendung in (1) durch Interpolation bestimmt werden. Die Vorgehensweise entspricht im wesentlichen derjenigen, die gemäss DE-A-42 33 196 bei der Messung der Entfernung eines Ziels angewandt wird. Es liegt auf der Hand, dass statt des Signals, das die Aussendung eines optischen Impulses durch den Sender 6 auslöst, mit gleicher Wirkung das Referenzempfangssignal verzögert werden kann.

Zur Erhöhung des Rauschabstandes können bei der Ermittlung der Referenzfunktion r auch die Resultate mehrerer hintereinander ausgeführter Messungen addiert oder gemittelt werden, ähnlich wie dies gemäss DE-A-36 20 226 im Zusammenhang mit der Messung der Entfernung eines Ziels beschrieben ist. Die Addition kann digital erfolgen, es ist jedoch auch möglich, die Messwerte in analoger Form, z. B. als elektrische Ladungen zu speichern und zu addieren und erst die Summe in digitale Form überzuführen, wie dies in ähnlichem Zusammenhang in der DE-A-44 40 613 beschrieben ist.

Beide Methoden, nämlich die Verfeinerung der Zeitauflösung und die Verbesserung des Rauschabstandes, wie sie oben für die Erfassung des Referenzempfangssignals beschrieben wurden, können übrigens auch im normalen Messbetrieb entweder einzeln oder zusammen zur Verbesserung der Zeitauflösung und des Rauschabstandes des Empfangssignals e eingesetzt werden, wenn der Umstand, dass sich dadurch die Anzahl der erforderlichen Impulse erhöht, keine grösseren i Nachteile zur Folge hat. Die Vorrichtung gemäss Fig. 1 ist dann entsprechend zu ergänzen.

Eine andere, in Fig. 3b dargestellte Möglichkeit der Verbesserung der zeitlichen Auflösung des Referenzempfangssignals besteht darin, die Entferung des Referenzziels 10 zu verändern. Es kann, mit einem Anfangswert d, nacheinander bei Entfernungen $d + c\tau_i/2$, i=0,...,I-1 gemessen werden. Dies führt ebenfalls zu Verzögerungen des Empfangssignals, ohne dass ein Verzögerungsglied eingesetzt werden müsste. Dabei ist jedoch i zu berücksichtigen, dass die Intensität des Empfangssignals durch die Strahlaufweitung etwa proportional zum Quadrat der Entfernung des Referenzziels 10 abnimmt.

Statt der direkten Bestimmung der Stützwerte der Referenzfunktion r als Messwerte oder Summen von Messwerten kann jedoch auch ein komplizierteres Verfahren angewandt werden. Dazu wird ein Ansatz gemacht, welcher die Menge der möglichen Referenzfunktionen r auf einen endlichdimensionalen Vektorraum reduziert. So kann etwa vorausgesetzt werden, dass die Referenzfunktion r im Raum der quadratischen Spline-Funktion mit einer festen Zahl von äquidistanten Stützstellen liegt. Dabei kann auch ein exponentielles Ausklingen berücksichtigt werden. Die Referenzfunktion r wird dann durch eine endliche Zahl reeller Parameter festgelegt.

Zur Bestimmung dieser Parameter werden die Abtastwerte der zeitverschobenen Referenzempfangssignale $e^n_i$, n=0,...,N, i=0,...,I-1, wobei $e^n_i$ den Wert bei einer Verzögerung $\tau_i$ und einem Abtastzeitpunkt $n\Delta$ darstellt, durch eine Ueberlagerung entsprechend zeitverschobener Exemplare der Referenzfunktion möglichst genau approximiert. Dazu wird die Minimalstelle des mittleren quadratischen Abstands gemäss dem Ausdruck

$$(14) \quad \sum_{n=0}^{N} \sum_{i=0}^{I-1} w^n_i (e^n_i - a_i r(n\Delta - \tau_i))^2$$

als Funktion der die Referenzfunktion r beschreibenden Parameter gesucht, wobei die $w^n_i$, n=0,...,N, i=0,...,I-1 Gewichtungskoeffizienten sind, die im einfachsten Fall alle gleich 1 gesetzt werden. Wird die Verzögerung durch das Verzögerungsglied 9 erzeugt, so kann für i=0,...,I-1 $a_i = 1$ gesetzt werden. Wird sie durch Verschiebung des Referenzziels 10 erzeugt, so müssen die Koeffizienten $a_i$ den Einfluss der Entfernung auf die Stärke des Eingangssignals berücksichtigen. Es ist jedoch auch möglich, die Koeffizienten ai ebenfalls als variabel zu betrachten und aus der Minimierung von (14) zu bestimmen. Die Verzögerungswerte können Vielfache des Referenzinkrements sein, aber auch andere, nicht äquidistante Werte annehmen.

**Bezugszeichenliste**

1 Recheneinheit
2 Eingabeeinheit
3 Ausgabeeinheit
4 Zähler
5 Oszillator
6 Sender
7 Analog-Digital-Wandler
8 Empfänger
9 Verzögerungsglied
10 Referenzziel
e Empfangssignal
r Referenzfunktion
f Korrelationsfunktion
Δ Abtastinkrement
δ Referenzinkrement

**Patentansprüche**

1. Verfahren zum Messen der Entfernung mindestens eines Ziels, bei welchem von einem Sender mindestens ein optischer Impuls gegen dasselbe gesandt, Reflexionen des mindestens einen Impulses von einem Empfänger aufgefangen und in ein Empfangssignal (e) umgewandelt und gespeichert und jeweils eine Laufzeit aus einem Empfangszeitpunkt des Eingangssignals ermittelt und daraus die Entfernung berechnet wird, **dadurch gekennzeichnet, dass** zur Ermittlung des mindestens einen Empfangszeitpunktes das Eingangssignal (e) mit Vergleichsfunktionen, welche um verschiedene Zeitintervalle verschobene Exemplare einer vorgängig ermittelten und gespeicherten Referenzfunktion (r) sind, verglichen und aus den Zeitintervallen, die den ähnlichsten Vergleichsfunktionen entsprechen, die Empfangszeitpunkte mindestens approximativ bestimmt werden.

2. Verfahren nach Anspruch 1, **dadurch gekennzeichnet, dass** der mindestens approximativen Bestimmung des mindestens einen Empfangszeitpunktes eine Menge von Vergleichsfunktionen zugrundegelegt wird, welche vorbestimmten festen Zeitintervallen entsprechen.

3. Verfahren nach Anspruch 2, **dadurch gekennzeichnet, dass** die vorbestimmten festen Zeitintervalle ganzzahlige Vielfache eines festen Grundintervalls sind.

4. Verfahren nach Anspruch 2 oder 3, **dadurch gekennzeichnet, dass** lediglich solche Vergleichsfunktionen herangezogen werden, bei denen jeweils eine ein Mass der Aehnlichkeit zum Empfangssignal (e) darstellende Aehnlichkeitsfunktion (f) ein lokales Maximum bildet, das eine bestimmte Schwelle (ε) überschreitet.

5. Verfahren nach Anspruch 4, **dadurch gekennzeichnet, dass** als Aehnlichkeitsfunktion eine Korrelationsfunktion (f) herangezogen wird.

6. Verfahren nach Anspruch 5, **dadurch gekennzeichnet, dass** die Funktionswerte der Korrelationsfunktion jeweils als Skalarprodukt zwischen dem Empfangssignal (e) und einer der Vergleichsfunktion berechnet werden.

7. Verfahren nach einem der Ansprüche 2 bis 6, **dadurch gekennzeichnet, dass** ausgehend von den approximativ bestimmten Empfangszeitpunkten durch Interpolation zwischen den Zeitintervallen exakte Empfangszeitpunkte bestimmt werden.

8. Verfahren nach einem der Ansprüche 4 bis 6 und Anspruch 7, **dadurch gekennzeichnet, dass** die Interpolation durch Ermittlung eines lokalen Maximums der zwischen Stützwerten zu einer stetigen Funktion ergänzten Korrelationsfunktion (f) erfolgt.

9. Verfahren nach Anspruch 7 oder 8, **dadurch gekennzeichnet, dass** die Interpolation mindestens zum Teil durchgeführt wird, indem der Abstand des Empfangssignals (e) von einem Vektorraum, der durch die den Empfangszeitpunkten entsprechenden Vergleichsfunktionen aufgespannt wird, ausgehend von dem Vektorraum, der von den Vergleichsfunktionen aufgespannt wird, welche den approximativ bestimmten Empfangszeitpunkten entsprechen, minimiert wird.

10. Verfahren nach einem der Ansprüche 1 bis 9, **dadurch gekennzeichnet, dass** das Empfangssignal (e) zu Zeitpunkten abgetastet wird, die jeweils im Abstand eines festen Abtastinkrements (Δ) aufeinanderfolgen.

11. Verfahren nach einem der Ansprüche 1 bis 10, **dadurch gekennzeichnet, dass** die Referenzfunktion (r) an einer Reihe von Stellen bestimmt wird, welche im Abstand von Referenzinkrementen (δ) aufeinanderfolgen.

12. Verfahren nach den Ansprüchen 10 und 11, **dadurch gekennzeichnet, dass** das Referenzinkrement (δ) jeweils dem Abtastinkrement (Δ), geteilt durch eine ganze Zahl >1 entspricht.

13. Verfahren nach einem der Ansprüche 1 bis 12, **dadurch gekennzeichnet, dass** zur Ermittlung der Referenzfunktion (r) mindestens ein optischer Impuls gegen ein Referenzziel (10) gesandt und das entsprechende Referenzeingangssignal zur Ermittlung der Stützwerte der Referenzfunktion (r) abgetastet wird.

14. Verfahren nach Anspruch 13, **dadurch gekennzeichnet, dass** zur Verbesserung der zeitlichen Auflösung das Referenzeingangssignal um verschiedene Verzögerungswerte zeitlich verschoben wird.

15. Verfahren nach Anspruch 14, **dadurch gekennzeichnet, dass** die zeitliche Verschiebung des Referenzeingangssignals durch Verzögerung der Aussendung des optischen Impulses durch den Sender (6) oder des Referenzeingangssignals erfolgt.

16. Verfahren nach Anspruch 14, **dadurch gekennzeichnet, dass** die zeitliche Verschiebung des Referenzeingangssignals durch Veränderung der Entfernung des Referenzzieles (10) erfolgt.

17. Verfahren nach einem der Ansprüche 13 bis 16, **dadurch gekennzeichnet, dass** zur Verbesserung des Rauschabstandes die Aussendung des optischen Impulses und die Abtastung des Referenzeingangssignals wiederholt und dabei zur Bildung der Stützwerte der Referenzfunktion (r) die gleichen Laufzeiten entsprechenden Abtastwerte addiert oder gemittelt werden.

18. Verfahren nach einem der Ansprüche 10 bis 17, **dadurch gekennzeichnet, dass** die Referenzfunktion (r) ausgehend von Stützwerten durch Interpolation zu einer stetigen, vorzugsweise mindestens einmal stetig differenzierbaren Funktion ergänzt wird.

19. Verfahren nach einem der Ansprüche 14 bis 17, **dadurch gekennzeichnet, dass** für die Referenzfunktion (r) ein Ansatz gemacht wird, gemäss welchem sie durch eine endliche Zahl von Parametern festlegbar ist und die Parameter aus einem Vergleich des Referenzeingangssignals mit um die Verzögerungswerte zeitverschobenen Exemplaren der Referenzfunktion bestimmt werden.

20. Verfahren nach Anspruch 19, **dadurch gekennzeichnet, dass** zur Bestimmung der Parameter der Abstand des Referenzempfangssignals von einer Ueberlagerung der um die Verzögerungswerte zeitverschobenen Exemplare der Referenzfunktion (r) minimiert wird.

EP 1 043 603 A1

Fig. 1

Fig. 2

Fig. 3a

Fig. 36

EP 1 043 603 A1

Europäisches
Patentamt

Nummer der Anmeldung

EP 99 10 6840

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 195 17 001 A (SICK OPTIK ELEKTRONIK ERWIN) 14. November 1996 (1996-11-14) * Spalte 5, Zeile 16 - Spalte 10, Zeile 53 * | 1-20 | G01S17/10 |
| A | EP 0 854 368 A (SICK AG) 22. Juli 1998 (1998-07-22) * Seite 4, Zeile 5 - Seite 4, Zeile 48 * | 1-20 | |
| A | EP 0 312 224 A (PANAMETRICS) 19. April 1989 (1989-04-19) * Seite 4, Zeile 18 - Seite 6, Zeile 43 * | | |
| A | EP 0 534 056 A (DEUTSCHE AEROSPACE) 31. März 1993 (1993-03-31) * Seite 5, Zeile 17 - Seite 6, Zeile 50 * | | |
| A | EP 0 797 105 A (SIEMENS AG) 24. September 1997 (1997-09-24) * das ganze Dokument * | | RECHERCHIERTE SACHGEBIETE (Int.Cl.7) G01S |

Der vorliegende Recherchenbericht wurde für alle Patentansprüche erstellt

| Recherchenort | Abschlußdatum der Recherche | Prüfer |
|---|---|---|
| MÜNCHEN | 8. September 1999 | Kahn, K-D |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes
    Dokument

EPO FORM 1503 03.82 (P04C03)

# EP 1 043 603 A1

## ANHANG ZUM EUROPÄISCHEN RECHERCHENBERICHT
## ÜBER DIE EUROPÄISCHE PATENTANMELDUNG NR.

EP 99 10 6840

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-09-1999

| Im Recherchenbericht angeführtes Patentdokument | | Datum der Veröffentlichung | Mitglied(er) der Patentfamilie | | Datum der Veröffentlichung |
|---|---|---|---|---|---|
| DE 19517001 | A | 14-11-1996 | EP 0742450 A | | 13-11-1996 |
| | | | US 5805468 A | | 08-09-1998 |
| EP 0854368 | A | 22-07-1998 | DE 19701803 A | | 01-10-1998 |
| | | | JP 10246783 A | | 14-09-1998 |
| EP 0312224 | A | 19-04-1989 | US 4787252 A | | 29-11-1988 |
| | | | DE 3879852 A | | 06-05-1993 |
| | | | JP 1193617 A | | 03-08-1989 |
| | | | JP 7078437 B | | 23-08-1995 |
| EP 0534056 | A | 31-03-1993 | DE 4128560 A | | 04-03-1993 |
| | | | DE 59207375 D | | 21-11-1996 |
| EP 0797105 | A | 24-09-1997 | DE 19611233 A | | 25-09-1997 |

EPO FORM P0461

Für nähere Einzelheiten zu diesem Anhang : siehe Amtsblatt des Europäischen Patentamts, Nr.12/82

14